# FASCICULE DE BREVET EUROPEEN

(11) **EP 1 302 232 B1**
(45) Date de publication et mention de la délivrance du brevet: **06.01.2010**
(21) Numéro de dépôt: 02292381.7
(22) Date de dépôt: 26.09.2002
(51) Int. Cl.: B01D 41/04, F01N 3/023

(54) **Procédé et installation de nettoyage d'un filtre à particules d'un véhicule automobile**
Verfahren und Vorrichtung zur Reinigung eines Partikelfilters eines Autos
Process and device for cleaning a particle filter of a car

(30) Priorité: 15.10.2001 FR 0113281
(43) Date de publication de la demande: 16.04.2003
(73) Titulaire: Peugeot Citroën Automobiles SA, 92200 Neuilly sur Seine (FR)
(72) Inventeur: Rigaudeau, Christine, 92800 Puteaux (FR); Walter, Christian, 78180 Montigny-Le-Bretonneux (FR)
(74) Mandataire: Ménès, Catherine

(56) Documents cités:
- EP-A- 1 060 780
- DD-A- 117 811
- DE-A- 19 834 942
- FR-A- 2 716 122
- US-A- 2 156 594

## Description

L'invention concerne un procédé de nettoyage d'un filtre à particules pour la dépollution de gaz d'échappement d'un moteur de véhicule automobile.

Les gaz d'échappement des moteurs Diesel qui utilisent du gazole comme carburant renferment à la fois des polluants gazeux tels que des hydrocarbures imbrûlés et des oxydes d'azote ou de carbone et des polluants solides qui sont principalement constitués par des particules de suie. Les normes antipollution appliquées aux moteurs Diesel nécessitent une élimination de plus en plus poussée des émissions de particules de suie dans les gaz d'échappement de ces moteurs.

Afin d'assurer l'élimination des particules de suie, un post-traitement des gaz d'échappement utilisant un filtre à particules est nécessaire.

Un tel filtre à particules est installé dans la ligne d'échappement du moteur et comporte au moins un élément de filtration constitué par un support filtrant à structure poreuse éventuellement associé à un autre élément de dépollution, fixé dans une enveloppe métallique qui est reliée à la ligne d'échappement. Le support filtrant ou les éléments filtrants disposés dans l'enveloppe métallique du filtre, appelés "canning", peuvent être constitués par des éléments en matière céramique poreuse. Le support filtrant est traversé par les gaz d'échappement entre une extrémité d'entrée et une extrémité de sortie du filtre, ce qui permet de retenir les particules solides de suie en suspension dans les gaz d'échappement, afin d'obtenir un gaz épuré en sortie. Le filtre à particules peut être disposé en aval d'un catalyseur.

Au cours du fonctionnement du moteur, le support filtrant se charge de particules de suie qui se déposent dans le support filtrant, de sorte que le filtre se colmate progressivement. Le décolmatage du filtre peut être obtenu en faisant brûler les suies déposées dans le support filtrant, sur la ligne même d'échappement, pendant l'utilisation du véhicule automobile.

Les suies, en présence d'oxygène, brûlent à des températures de l'ordre de 550°C à 600°C. De tels niveaux thermiques ne sont que rarement atteints par les gaz d'échappement d'un moteur Diesel d'un véhicule de tourisme. De ce fait, il est nécessaire de favoriser le début de la régénération des éléments de filtration par ajout dans le carburant d'un additif permettant d'abaisser la température de combustion des suies.

Les additifs peuvent être constitués par des composés minéraux en solution dans un solvant organique qui, mélangés dans des proportions déterminées au gazole, suivent le circuit du gazole. Ils sont ainsi injectés dans la chambre de combustion, par le système d'injection et leurs résidus de combustion se retrouvent dans les gaz d'échappement.

La présence de ces additifs dans le filtre à particules où ils sont mélangés intimement avec les particules de suies leur permet de jouer un rôle catalyseur lors de la combustion des particules de suie et d'abaisser les températures d'inflammation des suies aux environs de 350°C à 550°C.

La combustion, éventuellement catalysée, des suies dans le filtre à particules permet d'éliminer les composés organiques et le carbone contenu dans ces suies. Cependant, à l'issue de la régénération du filtre par combustion, il subsiste des résidus minéraux qui sont retenus dans le support filtrant. Ces résidus minéraux sont constitués en particulier par des résidus provenant des additifs d'aide à la combustion des suies, d'autres additifs incorporés au gazole ou encore de lubrifiant ; ces résidus peuvent être constitués également par des particules dues à l'usure du moteur ou provenant de l'environnement extérieur, lorsque de telles particules ne sont pas retenues par le filtre à air du moteur. Tous ces résidus restent stockés dans le support filtrant du filtre à particules. Du point de vue de la composition chimique, de nombreuses espèces peuvent être présentes dans ces résidus, par exemple des oxydes, des sulfates, des nitrates ou des phosphates d'éléments tels que le cérium, le zinc, le calcium, le cuivre, le fer ou le nickel.

Le filtre à particules s'encrasse progressivement et, après une certaine durée de fonctionnement dans la ligne d'échappement, le colmatage du support filtrant peut être tel qu'il en résulte une détérioration des performances du moteur et une augmentation de la consommation de carburant. Il est nécessaire alors, pour restaurer des conditions de fonctionnement satisfaisantes du filtre, soit de remplacer le filtre par un filtre neuf, soit de nettoyer le filtre.

Du fait du coût élevé des filtres à particules, il peut être intéressant économiquement d'éviter un remplacement du filtre.

On a proposé, dans les demandes de brevet français 99 07682 et 01 05582, des procédés de nettoyage d'un filtre à particules dans lesquels on fait passer, à travers le support filtrant du filtre à particules, dans le sens allant de l'extrémité de sortie vers l'extrémité d'entrée du filtre, un courant de liquide de nettoyage susceptible de dissoudre ou de décoller les résidus déposés dans les canaux ou porosités du support filtrant du filtre à particules. Pour améliorer le nettoyage, selon ces procédés, on peut envoyer à travers le filtre un gaz sous pression tel que de l'air susceptible de chasser le liquide de nettoyage et les résidus décollés ou dissous.

On peut effectuer également des phases de rinçage par passage d'eau à travers le filtre et des phases de séchage à l'air chaud.

Ces procédés qui permettent de restaurer les filtres à particules des véhicules automobiles après un certain temps d'utilisation nécessitent des installations relativement complexes et coûteuses qui comportent des moyens d'injection de liquide ou de gaz à travers les filtres à particules et des moyens de commande automatique des différentes phases successives du nettoyage.

Les opérations de nettoyage doivent être effectuées dans des ateliers ou usines spécialisées équipées d'installations de nettoyage qui doivent être utilisées pour la régénération de nombreux filtres à particules, de manière à amortir les coûts importants de ces installations.

En outre, dans le cas de certains résidus particulièrement adhérents, il est très difficile d'obtenir, en un temps limité, une dissolution ou un décollement suffisant des résidus.

Le but de l'invention est donc de proposer un procédé de nettoyage d'un filtre à particules comportant un support filtrant ayant une structure poreuse éventuellement associée à un catalyseur, fixé dans une enveloppe métallique ayant une ouverture d'entrée et une ouverture de sortie, l'enveloppe du filtre étant raccordée en service, par son ouverture d'entrée à une partie amont et par son ouverture de sortie à une partie aval d'une ligne d'échappement d'un véhicule automobile, de façon que le filtre soit traversé entre l'ouverture d'entrée et l'ouverture de sortie par un courant de gaz d'échappement du moteur du véhicule automobile renfermant des particules de suie dont une partie au moins qui est retenue par le support filtrant subit une combustion éventuellement catalysée dans le support filtrant, sous l'effet d'un échauffement, pour régénérer le filtre dans la ligne d'échappement, le procédé de nettoyage permettant de faciliter l'élimination de résidus minéraux encrassant le filtre à l'issue de la régénération par combustion du filtre à particules et d'éliminer les résidus partiellement ou totalement, sans utiliser d'installation complexe et coûteuse.

Dans ce but,
- on démonte au moins une partie de la ligne d'échappement comportant le filtre à particules pour le séparer du véhicule automobile ; et
- on met en contact le support filtrant avec une solution de nettoyage, pendant un temps suffisant pour assurer le trempage du support filtrant, de manière à assurer ou à faciliter le décollement des résidus retenus dans le support filtrant; et
- on introduit une partie au moins du filtre comportant le support filtrant dans une solution de nettoyage et on maintient le support filtrant dans la solution de nettoyage pour réaliser son trempage ;

Dans ce but également:
- on démonte au moins une partie de la ligne d'échappement comportant le filtre à particules pour le séparer du véhicule automobile; et
- on met en contact le support filtrant avec une solution de nettoyage, pendant un temps suffisant pour assurer le trempage du support filtrant, de manière à assurer ou à faciliter le décollement des résidus retenus dans le support filtrant; et
- on introduit le liquide de nettoyage à l'intérieur de l'enveloppe du filtre et on réalise le trempage du support filtrant à l'intérieur de l'enveloppe du filtre par le maintien du support filtrant dans le liquide de nettoyage.

Le procédé suivant l'invention peut être mis en oeuvre suivant l'une des modalités suivantes :
- on introduit et on maintient le support filtrant dans la solution de nettoyage dans une position telle qu'un axe du filtre et du support filtrant dirigé suivant la direction de circulation des gaz entre l'ouverture d'entrée et l'ouverture de sortie du filtre soit sensiblement vertical et dans un sens tel qu'une extrémité d'entrée soit en-dessous d'une extrémité de sortie des gaz d'échappement dans le support filtrant ;
- on introduit et on maintient le support filtrant dans la solution de nettoyage dans une position telle que l'axe du filtre et du support filtrant dirigé suivant la direction de circulation des gaz entre l'ouverture d'entrée et l'ouverture de sortie soit sensiblement horizontal, le trempage du filtre étant réalisé avec l'ouverture de sortie du filtre obturée ;
- dans une seconde phase du nettoyage, on fait passer à travers le support filtrant du filtre à particules, entre une extrémité de sortie et une extrémité d'entrée, un courant de fluide de nettoyage ;
- la solution de nettoyage est maintenue à une température ambiante pendant le trempage du support filtrant du filtre ;
- la solution de nettoyage est chauffée à une température sensiblement supérieure à une température ambiante, pendant le trempage du support filtrant du filtre ;
- la solution de nettoyage est agitée pendant le nettoyage par trempage du support filtrant du filtre, par l'un d'un moyen d'agitation mécanique, d'ultrasons et d'une circulation de la solution de nettoyage en utilisant une pompe ;
- on produit un déplacement ou une agitation du filtre à particules, pendant le nettoyage par trempage, pour faciliter le décollement de résidus déposés dans le support filtrant du filtre ;
- on introduit la partie du filtre comportant le support filtrant dans la solution de nettoyage contenue dans un bac de nettoyage, une partie restante du filtre comportant l'ouverture de sortie de l'enveloppe du filtre étant au-dessus du niveau de la solution de nettoyage dans le bac de trempage, et on maintient le niveau de la solution de nettoyage dans le bac dans une position sensiblement constante ;
- on bouche de manière étanche l'ouverture de sortie de l'enveloppe du filtre après immersion du support filtrant dans la solution de nettoyage, de manière à éviter le passage de la solution de nettoyage par l'ouverture de sortie de l'enveloppe du filtre ;
- à l'issue du nettoyage par trempage du support filtrant du filtre à particules, on effectue un rinçage et un séchage du support filtrant du filtre à particules ;
- on réalise un traitement et la régénération de la solution de nettoyage renfermant les résidus de nettoyage de filtres à particules, à l'état dissous ou en suspension ;
- après démontage de la partie de la ligne d'échappement comportant le filtre à particules, on réalise la régénération du support filtrant du filtre à particules, par combustion des suies présentes dans le support filtrant par l'un des moyens suivantes :
   . maintien du filtre à particules dans un four à température assurant la combustion des suies,
   . passage d'un gaz chaud tel que l'air à travers le support filtrant du filtre à particules, de manière à assurer la combustion des suies présentes dans le support filtrant, et
   . on met ensuite le support filtrant du filtre à particules en contact avec la solution de nettoyage ;
- on régénère le filtre sur la ligne d'échappement du véhicule automobile, préalablement au démontage de la partie de la ligne d'échappement comportant le filtre à particules.

Le nettoyage d'un filtre à particules selon la présente invention peut être réalisé dans une phase préalable à un nettoyage effectué selon l'un des procédés décrits dans les demandes de brevet 99 07682 et 01 05582, le trempage du support filtrant permettant de faciliter le décollement ou la dissolution des résidus. Le trempage peut être également suivi uniquement d'une opération de rinçage et de séchage du support filtrant.

Afin de bien faire comprendre l'invention, on va décrire à titre d'exemple, en se référant à aux figures jointes en annexe, plusieurs modes de mise en oeuvre d'un procédé de nettoyage de filtre à particules, selon l'invention.

La figure 1 est une vue en élévation et en coupe d'un bac de trempage de filtres à particules dans lequel sont disposés des filtres à particules pour leur nettoyage par trempage.

Les figures 2A et 2B sont des vues en élévation et en coupe analogues à la vue de la figure 1 montrant deux variantes de réalisation du nettoyage d'un filtre par trempage dans un bac de nettoyage.

Les figures 3A à 3D sont des vues en élévation et en coupe montrant quatre variantes de réalisation du nettoyage d'un filtre par trempage du support filtrant à l'intérieur de l'enveloppe métallique du filtre.

Après une certaine durée de fonctionnement d'un véhicule automobile à moteur Diesel comportant une ligne d'échappement sur laquelle est intercalé un filtre à particules, cette durée de fonctionnement pouvant correspondre, par exemple, à une distance parcourue par le véhicule de l'ordre de 80.000 km, il peut s'avérer nécessaire de réaliser un nettoyage du filtre à particules pour restaurer les performances du moteur et pour limiter la consommation de carburant.

Préalablement à l'opération de nettoyage proprement dite, on s'assure que le filtre a été régénéré par combustion des particules de suie contenues dans le support filtrant. Tous les composés organiques et les structures carbonées contenus dans les suies ont été brûlés mais le support filtrant renferme des résidus minéraux de natures diverses qui obstruent ses pores et ses canaux et entraînent le colmatage du filtre.

Dans un premier temps, on réalise la dépose de tout ou partie de la ligne d'échappement de manière à séparer, du véhicule automobile, le filtre à particules ou une partie de la ligne d'échappement comportant le filtre à particules. En particulier, lorsque le support filtrant du filtre à particules est contenu dans une enveloppe ou "canning" démontable, l'enveloppe est séparée de la ligne d'échappement et l'ensemble du filtre à particules comprenant le support filtrant à l'intérieur du canning est amené à une installation de nettoyage par trempage telle que représentée sur la figure.

Préalablement au nettoyage du filtre à particules, il peut être nécessaire ou souhaitable de compléter ou d'assurer la régénération du filtre, par combustion des suies encore présentes dans le filtre. Pour cela, le filtre qui a été séparé de la ligne d'échappement peut être placé dans un four et porté à une température assurant la combustion complète des suies. Le filtre peut être également raccordé à une installation permettant d'injecter un gaz chaud tel que de l'air à travers le filtre pour assurer la combustion et l'élimination des suies.

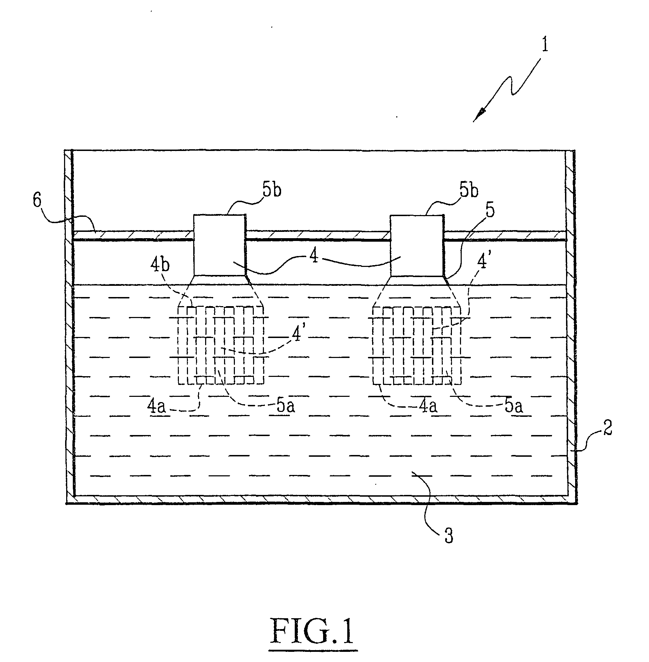

Dans le cas d'un premier mode de réalisation représenté sur la figure 1, l'installation de nettoyage par trempage, désignée dans son ensemble par le repère 1, comporte principalement un bac de trempage 2 dans lequel on a introduit une solution de nettoyage 3. La solution de nettoyage peut être une solution aqueuse renfermant différents additifs de nettoyage ou toute autre solution de nettoyage, par exemple à base de solvants organiques.

Les filtres à particules 4 qui ont été séparés de la ligne d'échappement comportent l'enveloppe ou canning 5 à l'intérieur de laquelle est placé le support filtrant 4'. Le canning 5 comporte une ouverture d'entrée 5a au niveau de laquelle il est relié, sur la ligne d'échappement, à la partie amont de la ligne d'échappement donnant accès à une première face, ou face d'entrée 4'a, du support filtrant et une seconde ouverture ou ouverture de sortie 5b reliée, sur la ligne d'échappement, à la partie aval de la ligne d'échappement donnant accès à une seconde face 4'b ou face de sortie du support filtrant 4'.

Les gaz d'échappement traversent le filtre à particules dans une direction longitudinale axiale du filtre allant de l'ouverture d'entrée 5a vers l'ouverture de sortie 5b.

Pour réaliser le nettoyage des filtres sur l'installation de nettoyage par trempage 1 représentée sur la figure 1, on fixe les filtres comportant le canning 5 et le support filtrant 4' à l'intérieur du canning, sur un support 6 situé au-dessus du niveau supérieur du liquide de nettoyage dans le bac 2, de telle manière que la direction longitudinale ou axe des filtres soit verticale et que l'extrémité d'entrée 4'a du support filtrant 4' soit en-dessous de l'extrémité de sortie 4'b. Les filtres sont fixés sur le support 6 au-dessus du niveau du liquide de nettoyage au voisinage de l'ouverture de sortie 5b. Le support filtrant 4' du filtre placé avec son axe longitudinal dans la direction verticale est immergé à l'intérieur du liquide de nettoyage.

La partie aval du filtre à particules comportant l'ouverture de sortie 5b de l'enveloppe 5 reste au-dessus du niveau supérieur du liquide de nettoyage, pendant le trempage.

Généralement, le niveau du liquide de nettoyage (comme représenté sur la figure 1) est maintenu légèrement au-dessus de l'extrémité de sortie 4'b de l'élément filtrant 4' et sensiblement en dessous de l'ouverture de sortie 5b de l'enveloppe 5 au niveau de laquelle le filtre 4 est fixé sur le support du bac de trempage 2, de manière à éviter toute introduction de la solution de nettoyage 3 dans le filtre par son ouverture de sortie.

Les supports filtrants des filtres à particules comportent des canaux de direction longitudinale dont les parois latérales poreuses assurent la filtration des gaz d'échappement et l'arrêt des particules de suie. Les canaux de filtration sont obturés à leur extrémité située au niveau de l'extrémité de sortie 4'b du support filtrant 4'. Les gaz d'échappement traversent la paroi latérale des canaux de filtration et pénètrent dans des canaux d'évacuation placés autour des canaux de filtration qui sont obturés au niveau de la face d'entrée 4'a de l'élément filtrant 4' et ouverts au niveau de la face de sortie 4b.

Les particules de suie s'accumulent sur les parois des canaux de filtration qui sont fermés au niveau de la face de sortie 4'b. Les éléments filtrants des filtres à particules sont généralement colmatés par les résidus de combustion des suies, principalement vers la sortie des canaux de filtration, au voisinage de la face de sortie 4'b de l'élément filtrant 4'.

Lors du trempage des filtres 4, comme représenté sur la figure 1, la solution de nettoyage pénètre dans les canaux du support filtrant jusqu'à un niveau proche du niveau supérieur de la solution de nettoyage dans le bac 2, ce niveau se trouvant un peu au-dessus de la face ou extrémité de sortie 4'b du support filtrant 4'. La solution de nettoyage, pendant le trempage, assure la dissolution et le décollement de résidus en particulier dans les parties aval des canaux de filtration du support filtrant 4', les résidus décollés ou dissous étant entraînés par gravité dans le fond du bac de nettoyage 2.

Du fait que la solution de nettoyage ne parvient pas jusqu'à la partie aval du filtre au voisinage de l'ouverture de sortie, on évite d'entraîner des résidus de la partie la plus encrassée du filtre au fond des canaux de filtration vers la paroi des canaux d'évacuation qui n'est pas encrassée.

Les filtres à particules 4 peuvent être maintenus à l'intérieur du bac de nettoyage 2 pendant une durée allant de quelques minutes à quelques heures, par exemple pendant une durée allant de deux minutes à vingt quatre heures.

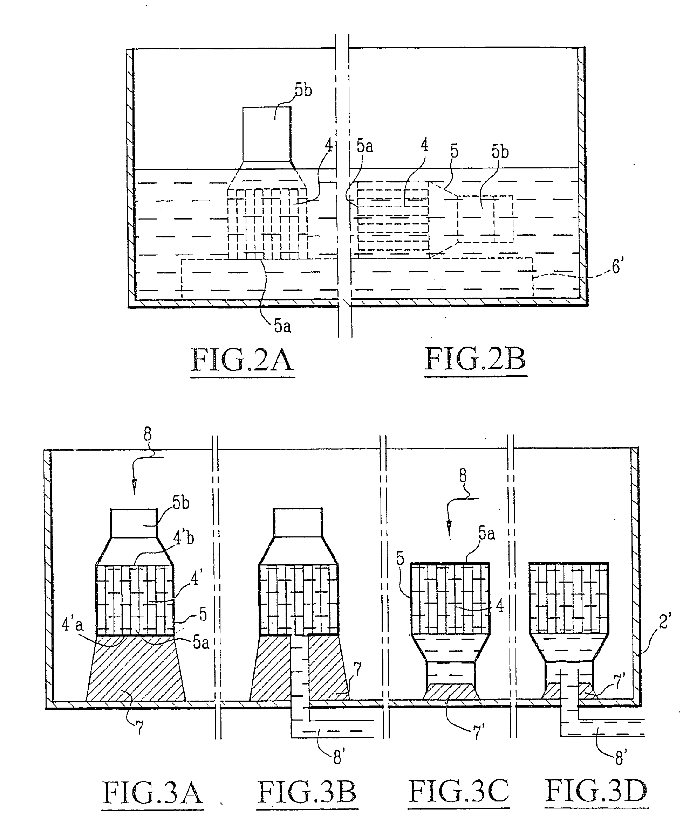

Sur les figures 2A et 2B, on a représenté deux variantes de réalisation du procédé de nettoyage par trempage du filtre 4 à l'intérieur d'un bac de nettoyage 2 renfermant une solution de nettoyage. Le filtre 4, au lieu d'être suspendu à un support 6, comme dans le cas du mode de réalisation représenté sur la figure 1, repose sur un support 6' immergé dans le bac de nettoyage 2. De préférence, le support 6' comporte une surface d'appui du filtre 4 constituée par une grille ou une tôle perforée.

Le filtre 4 peut être placé, pendant le trempage à l'intérieur du bac de nettoyage 2, avec son axe vertical (figure 2A). Il repose alors sur le support 6' au niveau de l'ouverture d'entrée 5a de l'enveloppe 5.

Le filtre peut également être placé avec son axe horizontal (figure 2B). L'ouverture de sortie 5b de l'enveloppe 5 est alors, de préférence, obturée par un bouchon pour empêcher le liquide de nettoyage de pénétrer par cette ouverture qui est immergée.

Sur les figures 3A, 3B, 3C et 3D, on a représenté quatre variantes de mise en oeuvre du procédé selon l'invention par trempage du support filtrant 4' du filtre 4, à l'intérieur de l'enveloppe métallique (5). Le filtre 4 est placé dans un bac de rétention 2' destiné à recueillir éventuellement de la solution de nettoyage au cours ou à l'issue du remplissage de l'enveloppe métallique 5 du filtre 4.

Sur la figure 3A relative à une première variante de réalisation du procédé par trempage du support filtrant 4' dans la solution de nettoyage à l'intérieur de l'enveloppe métallique 5 du filtre disposée verticalement dans le bac de rétention 2', on a représenté l'enveloppe métallique 5 du filtre reposant par son extrémité comportant l'ouverture d'entrée 5a sur le fond du bac 2', par l'intermédiaire d'un ensemble 7 de bouchage de l'extrémité d'entrée 4'a du support filtrant 4' solidaire du fond du bac de rétention 2'. On introduit la solution de nettoyage dans l'enveloppe du filtre 5, par son ouverture de sortie 5b, comme représenté par la flèche 8, généralement jusqu'au niveau de l'extrémité de sortie 4'b du support filtrant. On maintient la solution de nettoyage au contact du support filtrant 4' qui est totalement immergé, pendant un temps suffisant pour assurer le décollement de résidus minéraux déposés dans le support filtrant 4'.

La figure 3B est relative à une seconde variante de réalisation. Le filtre 4 repose sur l'ensemble de bouchage 7 par son extrémité comportant l'ouverture d'entrée 5a. Le remplissage de l'enveloppe 5 du filtre est réalisé, par le bas, par l'intermédiaire d'un conduit d'alimentation en solution de nettoyage 8' traversant le fond du bac 2' et l'ensemble de bouchage 7.

Sur la figure 3C, le filtre 4 repose par l'intermédiaire de l'extrémité de l'enveloppe 5 comportant l'ouverture de sortie 5b qui est ainsi obturée sur un bouchon 7' solidaire du fond du bac 2'. Comme représenté par la flèche 8, le remplissage du support filtrant 4' et de l'enveloppe 5 en solution de nettoyage est réalisé par l'ouverture de sortie 5a de l'enveloppe métallique 5.

Dans le cas de la variante représentée sur la figure 3D, le remplissage du filtre en liquide de nettoyage est réalisé par la conduite 8' traversant le bouchon 7'.

Le nettoyage par trempage peut être suivi d'un nettoyage par passage de liquide de nettoyage à travers le filtre selon les procédés des brevets 99 07682 et 01 05582. Dans ce cas, le nombre de cycles de nettoyage effectués pour la mise en oeuvre de ces procédés peut être réduit, du fait que le trempage favorise le décollement et la dissolution des résidus.

Par un choix judicieux de la solution de nettoyage et des conditions de trempage, il est possible de réaliser un nettoyage complet des filtres à particules par trempage sans effectuer ultérieurement d'opération de nettoyage par passage de liquide dans les filtres à particules selon les procédés antérieurs.

Dans tous les cas, il est préférable d'effectuer, à la suite de l'opération de nettoyage par trempage (suivie éventuellement d'un nettoyage par passage de liquide à travers le filtre), un rinçage du filtre, généralement à l'eau, et un séchage du filtre, généralement par de l'air chaud.

Le filtre peut ensuite être remonté sur la ligne d'échappement d'un véhicule automobile.

Suivant la nature de la solution de nettoyage utilisée, celle-ci peut être maintenue à température ambiante dans le bac de trempage ou l'enveloppe du filtre 5, pendant toute la durée du trempage ou, au contraire, chauffée à une température qui peut être sensiblement supérieure à la température ambiante.

Toutefois, cette température doit être inférieure à la température d'ébullition de la solution de nettoyage. Par exemple, dans le cas d'une solution aqueuse, la solution peut être utilisée à une température comprise par exemple entre 50°C et 80°C.

La solution de nettoyage peut être agitée à l'intérieur du bac de trempage 2 ou de l'enveloppe de filtre 5 pendant le trempage des filtres, de manière à activer le renouvellement de la solution de nettoyage au contact des résidus déposés dans le support filtrant. L'agitation de la solution peut être obtenue par un dispositif mécanique, par des ultrasons ou en imposant une circulation d'eau ou de liquide de nettoyage dans le bac de trempage 2 ou l'enveloppe de filtre 5, en utilisant une pompe.

Les filtres eux-mêmes peuvent être déplacés ou agités pendant le trempage, de façon à faciliter le décollement des résidus de combustion déposés dans les canaux du support filtrant. Par exemple, le support 6 ou encore le bac 2' peuvent comporter une plaque vibrante transmettant des vibrations au filtre 4 pendant le trempage.

Dans le cas d'un trempage à l'intérieur d'un bac de nettoyage, pour éviter d'introduire de la solution de nettoyage dans la partie aval du support filtrant 4' des filtres par l'ouverture de sortie 5b du filtre, il est possible, soit de maintenir le niveau supérieur de liquide de nettoyage à une distance suffisante en-dessous de l'ouverture de sortie 5b des filtres, pendant tout le trempage, soit de mettre en place, dans la partie de sortie des filtres, après immersion du support filtrant 4' dans la solution de nettoyage, des bouchons étanches évitant toute entrée de liquide de nettoyage dans le filtre par son ouverture de sortie 5b.

Après qu'on a réalisé le nettoyage par trempage d'un certain nombre de filtres à l'intérieur de la solution de nettoyage 3 contenue dans le bac de trempage 2, il peut être nécessaire de réaliser un traitement et une régénération de la solution de nettoyage. Cette régénération et ce traitement de la solution de nettoyage peut être une filtration pour éliminer les résidus, un traitement chimique ou une addition de produits de nettoyage.

Le procédé suivant l'invention permet de réaliser un décolmatage efficace des filtres à particules en utilisant des moyens simples et peu coûteux. Le décolmatage peut être obtenu uniquement par le procédé suivant l'invention ou en associant ce procédé à un procédé de nettoyage par exemple par injection de fluide, selon les brevets 99 07682 et 01 05582. Ainsi, une installation complète de nettoyage pourra comporter par exemple une première installation pour la régénération du filtre dans un four ou par passage de gaz chaud, une deuxième installation pour le trempage et une troisième installation pour le nettoyage, le rinçage et le séchage.

La régénération du filtre à particules peut être réalisée soit sur le filtre séparé de la ligne d'échappement, soit sur le véhicule automobile avant démontage de la partie de la ligne d'échappement comportant le filtre à particules.

L'invention s'applique au nettoyage de filtres à particules pour tout type de véhicule automobile.

## Revendications

1. Procédé de nettoyage d'un filtre à particules (4) comportant un support filtrant (4') ayant une structure poreuse éventuellement associée à un catalyseur, fixé dans une enveloppe métallique (5) ayant une ouverture d'entrée (5a) et une ouverture de sortie (5b), l'enveloppe du filtre étant raccordée, en service, par son ouverture d'entrée (5a) à une partie amont et par son ouverture de sortie (5b) à une partie aval d'une ligne d'échappement d'un véhicule automobile de façon que le filtre (4) soit traversé entre l'ouverture d'entrée (5a) et l'ouverture de sortie (5b) par un courant de gaz d'échappement du moteur du véhicule automobile renfermant des particules de suie dont une partie au moins qui est retenue par le support filtrant (4') subit une combustion éventuellement catalysée dans le support filtrant (4'), sous l'effet d'un échauffement, pour régénérer le filtre dans la ligne d'échappement, **caractérisé par le fait qu'**après une durée de fonctionnement du filtre (4) dans la ligne d'échappement telle que le support filtrant (4') du filtre (4) régénéré par combustion se trouve au moins partiellement colmaté par des résidus minéraux et que le fonctionnement du filtre soit altéré :
- on démonte au moins une partie de la ligne d'échappement comportant le filtre à particules (4) pour le séparer du véhicule automobile ; et
- on met en contact le support filtrant (4') avec une solution de nettoyage, pendant un temps suffisant pour assurer le trempage du support filtrant (4') de manière à assurer ou à faciliter le décollement des résidus retenus dans le support filtrant (4') ;
- ledit trempage étant réalisé par l'introduction d'une partie au moins du filtre (4) comportant le support filtrant (4'), dans une solution de nettoyage (3), et par le maintien du support filtrant (4') dans la solution de nettoyage.

2. Procédé de nettoyage suivant la revendication 1, **caractérisé par le fait qu'**on introduit et qu'on maintient le support filtrant (4') dans la solution de nettoyage dans une position telle qu'un axe du filtre (4) et du support filtrant (4'), dirigé suivant la direction de circulation des gaz entre l'ouverture d'entrée (5a) et l'ouverture de sortie (5b) du filtre (4), soit sensiblement vertical et dans un sens tel qu'une extrémité d'entrée (4'a) soit en dessous d'une extrémité de sortie (4'b) des gaz d'échappement dans le support filtrant (4).

3. Procédé de nettoyage suivant la revendication 1, **caractérisé par le fait qu'**on introduit et qu'on maintient le support filtrant (4') dans la solution de nettoyage dans une position telle que l'axe du filtre (4) et du support filtrant (4'), dirigé suivant la direction de circulation des gaz entre l'ouverture d'entrée (5a) et l'ouverture de sortie (5b), soit sensiblement horizontal, le trempage du filtre (4) étant réalisé avec l'ouverture de sortie (5b) du filtre obturée.

4. Procédé de nettoyage d'un filtre à particules (4) comportant un support filtrant (4') ayant une structure poreuse éventuellement associée à un catalyseur, fixé dans une enveloppe métallique (5) ayant une ouverture d'entrée (5a) et une ouverture de sortie (5b), l'enveloppe du filtre étant raccordée, en service, par son ouverture d'entrée (5a) à une partie amont et par son ouverture de sortie (5b) à une partie aval d'une ligne d'échappement d'un véhicule automobile de façon que le filtre (4) soit traversé entre l'ouverture d'entrée (5a) et l'ouverture de sortie (5b) par un courant de gaz d'échappement du moteur du véhicule automobile renfermant des particules de suie dont une partie au moins qui est retenue par le support filtrant (4') subit une combustion éventuellement catalysée dans le support filtrant (4'), sous l'effet d'un échauffement, pour régénérer le filtre dans la ligne d'échappement, **caractérisé par le fait qu'**après une durée de fonctionnement du filtre (4) dans la ligne d'échappement telle que le support filtrant (4') du filtre (4) régénéré par combustion se trouve au moins partiellement colmaté par des résidus minéraux et que le fonctionnement du filtre soit altéré :
- on démonte au moins une partie de la ligne d'échappement comportant le filtre à particules (4) pour le séparer du véhicule automobile ; et
- on met en contact le support filtrant (4') avec une solution de nettoyage, pendant un temps suffisant pour assurer le trempage du support filtrant (4') de manière à assurer ou à faciliter le décollement des résidus retenus dans le support filtrant (4') ;
- le liquide de nettoyage étant introduit à l'intérieur de l'enveloppe du filtre (4) et le trempage du support filtrant (4') étant réalisé à l'intérieur de l'enveloppe (5) du filtre (4) par le maintien du support filtrant dans le liquide de nettoyage.

5. Procédé de nettoyage selon l'une quelconque des revendications 1 à 4, **caractérisé par le fait que**, dans une seconde phase du nettoyage, on fait passer à travers le support filtrant (4') du filtre à particules (4), entre une extrémité de sortie (4b) et une extrémité d'entrée (4a), un courant de fluide de nettoyage.

6. Procédé suivant l'une quelconque des revendications 1 à 5, **caractérisé par le fait que** la solution de nettoyage est maintenue à une température ambiante pendant le trempage du support filtrant (4') du filtre (4).

7. Procédé suivant l'une quelconque des revendications 1 à 5, **caractérisé par le fait que** la solution de nettoyage est chauffée à une température sensiblement supérieure à une température ambiante, pendant le trempage du support filtrant (4') du filtre (4).

8. Procédé suivant l'une quelconque des revendications 1 à 7, **caractérisé par le fait que** la solution de nettoyage est agitée pendant le nettoyage par trempage du support filtrant (4') du filtre (4), par l'un d'un moyen d'agitation mécanique, d'ultrasons et d'une circulation de la solution de nettoyage en utilisant une pompe.

9. Procédé suivant l'une quelconque des revendications 1 à 8, **caractérisé par le fait qu'**on produit un déplacement ou une agitation du filtre à particules (4), pendant le nettoyage par trempage, pour faciliter le décollement de résidus déposés dans le support filtrant (4') du filtre (4).

10. Procédé suivant l'une quelconque des revendications 1 et 2, **caractérisé par le fait qu'**on introduit la partie du filtre comportant le support filtrant (4') dans la solution de nettoyage contenue dans un bac de nettoyage (2), une partie restante du filtre comportant l'ouverture de sortie (5b) de l'enveloppe (5) du filtre (4) étant au-dessus du niveau de la solution de nettoyage (3) dans le bac de trempage (2), et qu'on maintient le niveau de la solution de nettoyage dans le bac (3) dans une position sensiblement constante.

11. Procédé suivant l'une quelconque des revendications 1 à 10, **caractérisé par le fait qu'**on bouche de manière étanche l'ouverture de sortie (5b) de l'enveloppe (5) du filtre (4) après immersion du support filtrant (4') dans la solution de nettoyage, de manière à éviter le passage de la solution de nettoyage par l'ouverture de sortie (5b) de l'enveloppe (5) du filtre (4).

12. Procédé suivant l'une quelconque des revendications 1 à 11, **caractérisé par le fait qu'**à l'issue du nettoyage par trempage du support filtrant (4') du filtre à particules (4), on effectue un rinçage et un séchage du support filtrant (4') du filtre à particules (4).

13. Procédé suivant l'une quelconque des revendications 1 à 12, **caractérisé par le fait qu'**on réalise un traitement et la régénération de la solution de nettoyage renfermant les résidus de nettoyage de filtre à particules (4), à l'état dissous ou en suspension.

14. Procédé suivant l'une quelconque des revendications 1 à 13, **caractérisé par le fait qu'**après démontage de la partie de la ligne d'échappement comportant le filtre à particules (4), on réalise la régénération du support filtrant (4') du filtré à particules (4), par combustion des suies présentes dans l'élément filtrant (4') par l'un des moyens suivants :
- maintien du filtre à particules (14) dans un four à température assurant la combustion des suies,
- passage d'un gaz chaud tel que l'air à travers le support filtrant (4') du filtre à particules (4), de manière à assurer la combustion des suies présentes dans l'élément filtrant (4'),
et qu'on met ensuite le support filtrant (4') du filtre à particules (4) en contact avec la solution de nettoyage.

15. Procédé suivant l'une quelconque des revendications 1 à 13, **caractérisé par le fait qu'**on régénère le filtre (4) sur la ligne d'échappement du véhicule automobile, préalablement au démontage de la partie de la ligne d'échappement comportant le filtre à particules (4).

## Claims

1. Method for cleaning a particulate filter (4) filtering support (4') that has a porous structure, possibly combined with a catalyst, fixed inside a metal casing (5) that has an inlet opening (5a) and an outlet opening (5b), the filter casing being connected, in service, by its inlet opening (5a), to an upstream part and, by its outlet opening (5b), to a downstream part, of an exhaust line of a motor vehicle so that a stream of exhaust gases from the engine of the motor vehicle and containing soot particles passes through the filter (4) between the inlet opening (5a) and the outlet opening (5b), at least some of the soot being held on the filtering support (4'), and undergoing combustion, possibly catalyzed combustion, in the filtering support (4') under the effect of heating in order to regenerate the filter in the exhaust line, **characterized in that** after the filter (4) has been in operation in the exhaust line for a length of time such that the filtering support (4') of the filter (4) regenerated by combustion finds itself at least partially plugged with organic residue and filter operation is impaired:
- part of the exhaust line containing the particulate filter (4) is removed to detach it from the motor vehicle; and
- the filtering support (4') is brought into contact with a cleaning solution for long enough to soak the filtering support (4') in order to detach or ease the detachment of the residue held in the filtering support (4');
- said soaking being performed by introducing at least part of the filter (4) containing the filtering support (4') into a cleaning solution (3) and by keeping the filtering support (4') in the cleaning solution.

2. Method of cleaning according to Claim 1, **characterized in that** the filtering support (4') is introduced into and kept in the cleaning solution in a position such that an axis of the filter (4) and of the filtering support (4'), directed in the direction in which the gases flow between the inlet opening (5a) and the outlet opening (5b) of the filter (4) is substantially vertical and in a direction such that an inlet end (4'a) lies lower than an outlet end (4'b) for the exhaust gases in the filtering support (4).

3. Method of cleaning according to Claim 1, **characterized in that** the filtering support (4') is introduced into and kept in the cleaning solution in a position such that the axis of the filter (4) and of the filtering support (4'), directed in the direction of flow of gases between the inlet opening (5a) and the outlet opening (5b) is substantially horizontal, the filter (4) being soaked with the filter outlet opening (5b) closed off.

4. Method for cleaning a particulate filter (4) filtering support (4') that has a porous structure, possibly combined with a catalyst, fixed inside a metal casing (5) that has an inlet opening (5a) and an outlet opening (5b), the filter casing being connected, in service, by its inlet opening (5a), to an upstream part and, by its outlet opening (5b), to a downstream part, of an exhaust line of a motor vehicle so that a stream of exhaust gases from the engine of the motor vehicle and containing soot particles passes through the filter (4) between the inlet opening (5a) and the outlet opening (5b), at least some of the soot being held on the filtering support (4'), and undergoing combustion, possibly catalyzed combustion, in the filtering support (4') under the effect of heating in order to regenerate the filter in the exhaust line, **characterized in that** after the filter (4) has been in operation in the exhaust line for a length of time such that the filtering support (4') of the filter (4) regenerated by combustion finds itself at least partially plugged with organic residue and filter operation is impaired:
- part of the exhaust line containing the particulate filter (4) is removed to detach it from the motor vehicle; and
- the filtering support (4') is brought into contact with a cleaning solution for long enough to soak the filtering support (4') in order to detach or ease the detachment of the residue held in the filtering support (4');
- the cleaning liquid being introduced into the casing of the filter (4) and the filtering support (4') being soaked inside the casing (5) of the filter (4) by keeping the filtering support in the cleaning liquid.

5. Method of cleaning according to any one of Claims 1 to 4, **characterized in that**, in a second phase of the cleaning, a stream of cleaning fluid is passed through the filtering support (4') of the particulate filter (4) between an outlet end (4b) and an inlet end (4a).

6. Method according to any one of Claims 1 to 5, **characterized in that** the cleaning solution is kept at ambient temperature while the filtering support (4') of the filter (4) is in soak.

7. Method according to any one of Claims 1 to 5, **characterized in that** the cleaning solution is heated to a temperature appreciably higher than ambient temperature while the filtering support (4') of the filter (4) is in soak.

8. Method according to any one of Claims 1 to 7, **characterized in that** the cleaning solution is agitated while the filtering support (4') of the filter (4) is being cleaned by soaking, using a mechanical means of agitation, ultrasound, and pumped circulation of cleaning solution.

9. Method according to any one of Claims 1 to 8, **characterized in that** the particulate filter (4) is moved or agitated during the cleaning by soaking, to make it easier to detach residue deposited in the filtering support (4') of the filter (4).

10. Method according to either one of Claims 1 and 2, **characterized in that** that part of the filter that comprises the filtering support (4') is introduced into the cleaning solution contained in a cleaning tank (2), a remaining part of the filter comprising the outlet opening (5b) of the casing (5) of the filter (4) being above the level of cleaning solution (3) in the soaking tank (2), and **in that** the level of cleaning solution in the tank (3) is kept at a substantially constant level.

11. Method according to any one of Claims 1 to 10, **characterized in that** the outlet end (5b) of the casing (5) of the filter (4) is sealed after the filtering support (4') has been immersed in the cleaning solution, so as to prevent cleaning solution from passing through the outlet opening (5b) of the casing (5) of the filter (4).

12. Method according to any one of Claims 1 to 11, **characterized in that**, at the end of the cleaning, by soaking, of the filtering support (4') of the particulate filter (4), the filtering support (4') of the particulate filter (4) is rinsed and dried.

13. Method according to any one of Claims 1 to 12, **characterized in that** the cleaning solution containing the residue from the cleaning of the particulate filter (4) in a dissolved state or in suspension is treated and regenerated.

14. Method according to any one of Claims 1 to 13, **characterized in that** having removed that part of the exhaust line that contains the particulate filter (4), the filtering support (4') of the particulate filter (4) is regenerated by burning off the soot present in the filtering element (4') using one of the following means:
- keeping the particulate filter (14) in an oven at a temperature at which the soot will burn,
- passing a hot gas such as air through the filtering support (4') of the particulate filter (4) so as to burn off the soot present in the filtering element (4'),
and **in that** the filtering support (4') of the particulate filter (4) is then brought into contact with the cleaning solution.

15. Method according to any one of Claims 1 to 13, **characterized in that** the filter (4) is regenerated in the exhaust line of the motor vehicle before that part of the exhaust line containing the particulate filter (4) is removed.

## Patentansprüche

1. Verfahren zur Reinigung eines Partikelfilters (4), der ein Filtermedium (4') aufweist, das eine ggf. einem Katalysator zugeordnete poröse Struktur hat, der in einer Metallhülle (5) befestigt ist, die eine Eingangsöffnung (5a) und eine Ausgangsöffnung (5b) hat, wobei die Hülle des Filters im Betrieb über ihre Eingangsöffnung (5a) mit einem vorne liegenden Bereich und über ihre Ausgangsöffnung (5b) mit einem hinten liegenden Bereich einer Auspuffanlage eines Kraftfahrzeugs verbunden ist, so dass der Filter (4) zwischen der Eingangsöffnung (5a) und der Ausgangsöffnung (5b) von einem Rußpartikel enthaltenden Abgasstrom des Motors des Kraftfahrzeugs durchströmt wird, von denen mindestens ein Teil, der vom Filtermedium (4') zurückgehalten wird, eine ggf. katalysierte Verbrennung in dem Filtermedium (4') unter der Wirkung einer Erwärmung erfährt, um den Filter in der Auspuffanlage zu regenerieren, **dadurch gekennzeichnet, dass** nach einer derartigen Betriebsdauer des Filters (4) in der Auspuffanlage, dass das Filtermedium (4') des durch Verbrennung regenerierten Filters (4) zumindest teilweise von mineralischen Rückständen verstopft und der Betrieb des Filters verändert ist:
- mindestens ein Teil der Auspuffanlage, der den Partikelfilter (4) enthält, ausgebaut wird, um ihn vom Kraftfahrzeug zu trennen; und
- das Filtermedium (4') während einer ausreichenden Zeit mit einer Reinigungslösung in Kontakt gebracht wird, um das Durchfeuchten des Filtermediums (4') zu gewährleisten, damit das Ablösen der im Filtermedium (4') zurückgehaltenen Rückstände gewährleistet oder erleichtert wird;
- wobei das Durchfeuchten durch die Einführung mindestens eines Teils des das Filtermedium (4') aufweisenden Filters (4) in eine Reinigungslösung (3) und durch den Halt des Filtermediums (4') in der Reinigungslösung durchgeführt wird.

2. Reinigungsverfahren nach Anspruch 1, **dadurch gekennzeichnet, dass** das Filtermedium (4') in die Reinigungslösung eingeführt und dort in einer solchen Stellung, dass eine Achse des Filters (4) und des Filtermediums (4'), die in Strömungsrichtung der Gase zwischen der Eingangsöffnung (5a) und der Ausgangsöffnung (5b) des Filters (4) gerichtet ist, im Wesentlichen senkrecht ist, und in einer solchen Richtung gehalten wird, dass ein Eingangsende (4'a) sich unter einem Ausgangsende (4'b) der Abgase im Filtermedium (4} befindet.

3. Reinigungsverfahren nach Anspruch 1, **dadurch gekennzeichnet, dass** das Filtermedium (4') in die Reinigungslösung eingeführt und in einer solchen Stellung gehalten wird, dass die Achse des Filters (4) und des Filtermediums (4'), die in Strömungsrichtung der Gase zwischen der Eingangsöffnung (5a) und der Ausgangsöffnung (5b) gerichtet ist, im Wesentlichen waagrecht ist, wobei das Durchfeuchten des Filters (4) bei verschlossener Ausgangsöffnung (5b) des Filters durchgeführt wird.

4. Verfahren zur Reinigung eines Partikelfilters (4), der ein Filtermedium (4') aufweist, das eine ggf. einem Katalysator zugeordnete poröse Struktur hat, der in einer Metallhülle (5) befestigt ist, die eine Eingangsöffnung (5a) und eine Ausgangsöffnung (5b) hat, wobei die Hülle des Filters im Betrieb über ihre Eingangsöffnung (5a) mit einem vorne liegenden Bereich und über ihre Ausgangsöffnung (5b) mit einem hinten liegenden Bereich einer Auspuffanlage eines Kraftfahrzeugs verbunden ist, so dass der Filter (4) zwischen der Eingangsöffnung (5a) und der Ausgangsöffnung (5b) von einem Rußpartikel enthaltenden Abgasstrom des Motors des Kraftfahrzeugs durchströmt wird, von denen mindestens ein Teil, der vom Filtermedium (4') zurückgehalten wird, eine ggf. katalysierte Verbrennung in dem Filtermedium (4') unter der Wirkung einer Erwärmung erfährt, um den Filter in der Auspuffanlage zu regenerieren, **dadurch gekennzeichnet, dass** nach einer derartigen Betriebsdauer des Filters (4) in der Auspuffanlage, dass das Filtermedium (4') des durch Abbrennen regenerierten Filters (4) zumindest teilweise von mineralischen Rückständen verstopft und der Betrieb des Filters verändert ist:
- mindestens ein Teil der den Partikelfilter (4) enthaltenden Auspuffanlage ausgebaut wird, um ihn vom Kraftfahrzeug zu trennen; und
- das Filtermedium (4') während einer ausreichenden Zeit mit einer Reinigungslösung in Kontakt gebracht wird, um das Durchfeuchten des Filtermediums (4') zu gewährleisten, damit das Ablösen der im Filtermedium (4') zurückgehaltenen Rückstände gewährleistet oder erleichtert wird;
- wobei die Reinigungsflüssigkeit ins Innere der Hülle des Filters (4) eingeführt und das Durchfeuchten des Filtermediums (4') im Inneren der Hülle (5) des Filters durch den Halt des Filtermediums in der Reinigungsflüssigkeit durchgeführt wird.

5. Reinigungsverfahren nach einem der Ansprüche 1 bis 4, **dadurch gekennzeichnet, dass** in einer zweiten Phase der Reinigung ein Reinigungsflüssigkeitsstrom zwischen einem Ausgangsende (4b) und einem Eingangsende (4a) durch das Filtermedium (4') des Partikelfilters (4) geleitet wird.

6. Verfahren nach einem der Ansprüche 1 bis 5, **dadurch gekennzeichnet, dass** die Reinigungslösung während des Durchfeuchtens des Filtermediums (4') des Filters (4) auf einer Umgebungstemperatur gehalten wird.

7. Verfahren nach einem der Ansprüche 1 bis 5, **dadurch gekennzeichnet, dass** die Reinigungslösung während des Durchfeuchtens des Filtermediums (4') des Filters (4) auf eine Temperatur wesentlich höher als eine Umgebungstemperatur aufgeheizt wird.

8. Verfahren nach einem der Ansprüche 1 bis 7, **dadurch gekennzeichnet, dass** die Reinigungslösung während der Reinigung des Filtermediums (4') des Filters (4) mittels Durchfeuchten von einem mechanischen Rührwerk, von Ultraschallwellen und von einer Zirkulation der Reinigungslösung durch Verwendung einer Pumpe gerührt wird.

9. Verfahren nach einem der Ansprüche 1 bis 8, **dadurch gekennzeichnet, dass** eine Verschiebung oder ein Schütteln des Partikelfilters (4) während der Reinigung mittels Durchfeuchten durchgeführt wird, um das Ablösen von im Filtermedium (4') des Filters (4) abgelagerten Rückständen zu erleichtern.

10. Verfahren nach einem der Ansprüche 1 und 2, **dadurch gekennzeichnet, dass** der das Filtermedium (4') enthaltende Teil des Filters in die in einem Reinigungsbehälter (2) enthaltene Reinigungslösung eingeführt wird, wobei ein die Ausgangsöffnung (5b) der Hülle (5) des Filters (4) enthaltender, verbleibender Teil des Filters sich oberhalb des Pegels der Reinigungslösung (3) im Durchfeuchtungsbehälter (2) befindet und der Pegel der Reinigungslösung im Behälter (3) in einer im Wesentlichen konstanten Stellung gehalten wird.

11. Verfahren nach einem der Ansprüche 1 bis 10, **dadurch gekennzeichnet, dass** die Ausgangsöffnung (5b) der Hülle (5) des Filters (4) nach dem Eintauchen des Filtermediums (4') in die Reinigungslösung dicht verschlossen wird, um den Durchgang der Reinigungslösung durch die Ausgangsöffnung (5b) der Hülle (5) des Filters (4) zu verhindern.

12. Verfahren nach einem der Ansprüche 1 bis 11, **dadurch gekennzeichnet, dass** nach der Reinigung mittels Durchfeuchten des Filtermediums (4') des Partikelfilters (4) ein Spülen und Trocknen des Filtermediums (4') des Partikelfilters (4) durchgeführt wird.

13. Verfahren nach einem der Ansprüche 1 bis 12, **dadurch gekennzeichnet, dass** eine Behandlung und die Regenerierung der die Reinigungsrückstände des Partikelfilters (4) im aufgelösten oder suspendierten Zustand enthaltenden Reinigungslösung durchgeführt wird.

14. Verfahren nach einem der Ansprüche 1 bis 13, **dadurch gekennzeichnet, dass** nach dem Ausbau des den Partikelfilter (4) enthaltenden Teils der Auspuffanlage die Regenerierung des Filtermediums (4') des Partikelfilters (4) durch Abbrennen der im Filterelement (4') enthaltenden Ruße durch eines der folgenden Mittel durchgeführt wird:
- Halt des Partikelfilters (14) in einem Ofen bei einer Temperatur, die das Abbrennen der Ruße gewährleistet,
- Durchgang eines heißen Gases wie Luft durch das Filtermedium (4') des Partikelfilters (4), um das Abbrennen der im Filterelement (4') enthaltenen Ruße zu gewährleisten,
und dass anschließend das Filtermedium (4') des Partikelfilters (4) mit der Reinigungslösung in Kontakt gebracht wird.

15. Verfahren nach einem der Ansprüche 1 bis 13, **dadurch gekennzeichnet, dass** der Filter (4) in der Auspuffanlage des Kraftfahrzeugs vor dem Ausbau des den Partikelfilter (4) enthaltenden Teils der Auspuffanlage regeneriert wird.
